# FASCICULE DE BREVET EUROPEEN

(11) **EP 0 670 345 B1**
(45) Date de publication et mention de la délivrance du brevet: **22.09.1999**
(21) Numéro de dépôt: 95200361.4
(22) Date de dépôt: 15.02.1995
(51) Int. Cl.: C08K 3/04, B32B 1/08

(54) **Matériau thermoplastique composite et procédé de fabrication d'articles à base de celui-ci**
Thermoplastisches Verbundmaterial und Verfahren zur Herstellung von Artikeln daraus
Thermoplastic composite material and process for producing articles therefrom

(30) Priorité: 01.03.1994 FR 9402433
(43) Date de publication de la demande: 06.09.1995
(73) Titulaire: SOLVAY (Société Anonyme), 1050 Bruxelles (BE)
(72) Inventeur: Delimoy, Didier, B-1325 Chaumont-Gistoux (BE)
(74) Mandataire: Dambois, Denis Camille Daniel

(56) Documents cités:
- EP-A- 0 087 383
- EP-A- 0 309 284
- EP-A- 0 485 181
- GB-A- 1 135 928

## Description

La présente invention concerne un matériau thermoplastique composite, ainsi qu'un procédé de fabrication d'articles à base de celui-ci.

Dans de nombreux procédés de mise en oeuvre de matériaux thermoplastiques, on porte ceux-ci, au moyen d'un rayonnement infra-rouge, à une température suffisante pour provoquer leur ramollissement ou leur fusion superficielle.

Il en va par exemple ainsi lors du thermoformage d'articles plats tels que films, plaques ou bandes, durant lequel ceux-ci sont chauffés avant d'être mis en forme.

Il en va de même lors de l'imprégnation d'un faisceau de fibres de renforcement continues par de la poudre de polymère. Cette technique, décrite notamment dans la demande de brevet WO 87/000563, consiste à disperser un ou plusieurs polymères, à l'état de poudre, entre des fibres continues formant un faisceau, et à faire ensuite fondre ces polymères de manière à permettre leur écoulement entre les fibres. On utilise de préférence un procédé de chauffage sans contact, par exemple un procédé de chauffage par rayonnement infra-rouge.

Cependant, la plupart des matériaux thermoplastiques n'absorbent que faiblement le rayonnement infra-rouge, surtout lorsqu'ils contiennent des fibres de verre, dont l'émissivité est très élevée. Il s'ensuit que le chauffage de tels matériaux thermoplastiques se fait lentement et avec un rendement énergétique médiocre, ce qui est contraire aux impératifs économiques liés à toute production industrielle. C'est pourquoi, dans les variantes connues de la technique de chauffage par rayonnement infra-rouge de matériaux thermoplastiques, on incorpore généralement aux matériaux thermoplastiques à traiter une quantité importante, généralement supérieure à un pour cent en masse, d'une substance absorbant substantiellement ce rayonnement, par exemple de noir de carbone, en vue d'augmenter leur absorption thermique et de réduire leur temps de chauffage.

L'incorporation d'une quantité importante de substance absorbante présente cependant plusieurs inconvénients, qui découlent essentiellement de l'inhomogénéité du profil de température dans l'épaisseur du matériau thermoplastique lors de son irradiation. Si la quantité de substance absorbante est élevée, l'absorption du rayonnement se fait presqu'uniquement à la surface du matériau thermoplastique, ce qui peut conduire à une mauvaise fusion de son coeur et a l'apparition de contraintes internes ainsi que, partant, à des hétérogénéités réduisant les performances mécaniques globales du matériau thermoplastique. En particulier, l'adhérence d'éventuelles fibres de renforcement au matériau thermoplastique auquel elles sont incorporées peut être réduite. En outre, une absorption majoritaire du rayonnement en surface augmente considérablement le temps nécessaire à une fusion complète du matériau thermoplastique traité, et est donc désavantageuse sur le plan de l'efficacité et de la rentabilité industrielles.

Il serait envisageable d'utiliser une puissance de chauffage plus élevée, mais ceci pourrait provoquer un échauffement excessif des parties superficielles du matériau thermoplastique et le dégrader thermiquement. Quelle que soit la solution retenue, il en résulte au mieux une baisse de productivité.

En outre, la présence d'une quantité non négligeable d'une substance étrangère au sein d'un matériau thermoplastique peut provoquer une réduction de ses performances mécaniques.

La présente invention vise dès lors à fournir un matériau thermoplastique pouvant être chauffé de manière rapide, homogène et économique, et conduisant à des produits présentant de bonnes propriétés mécaniques.

De manière plus précise, la présente invention concerne un matériau thermoplastique comprenant au moins une polyoléfine et au moins une substance absorbant substantiellement le rayonnement infra-rouge, qui se caractérise en ce qu'il comprend de 1 à 1000 ppm en masse de substance absorbante exprimée par rapport à la masse totale de la ou des matières polymères présentes dans le matériau thermoplastique.

Par matériau thermoplastique, on entend désigner tout matériau à base d'un polymère thermoplastique ou d'un mélange de plusieurs polymères thermoplastiques. A titre d'exemples non-limitatifs de polymères thermoplastiques, on peut citer les polyoléfines, les polymères vinyliques ou les polyamides. On préfère utiliser les polyoléfines, en particulier les homo- et copolymères de l'éthylène ou du propylène. Dans le matériau thennoplastique selon l'invention, le ou les polymères peuvent se présenter sous une forme quelconque, par exemple à l'état de granules, de poudre, de fibres ou de films.

Par "substance absorbant substantiellement le rayonnement infra-rouge", on entend désigner une substance dont l'absorption à toutes les longueurs d'ondes formant la plage du rayonnement infra-rouge, c'est-à-dire de 750 nm à 1 mm. est d'au moins 50 % de celle du corps noir. Cette condition étant remplie, la substance absorbante visée peut être quelconque; il peut également s'agir d'un mélange de plusieurs telles substances. Lorsque la substance absorbante présente un maximum d'absorption, on préfère que ce maximum corresponde à une longueur d'onde l'ordre de 1 à 10 µm. Rien ne s'oppose à ce qu'un additif ajouté dans un but spécifique, par exemple une charge minérale ou des fibres de renforcement, contienne ou joue en outre le rôle d'une substance absorbante. On peut notamment utiliser des fibres de verre dont l'ensimage comprend une substance absorbante. Dans de tels cas, la quantité de cet additif doit être prise en considération pour le respect des proportions de substance absorbante. Si l'on constate qu'un additif particulier, ajouté au matériau thermoplastique dans un but spécifique, absorbe le rayonnement infra-rouge, il se peut donc que l'on doive limiter la quantité de cet additif afin de respecter les proportions de substance absorbante, ou en changer, afin d'obtenir un matériau thermoplastique conforme à l'invention. De manière préférée, la substance absorbante comprend du noir de carbone.

L'incorporation de la substance absorbante au matériau thermoplastique peut se faire par toute technique connue permettant d'incorporer un additif au sein d'une composition de matières polymères. La substance absorbante est généralement mise en oeuvre à l'état de poudre finement divisée. Son incorporation peut notamment se réaliser par mélange à froid avec l'un ou plusieurs des constituants du matériau thermoplastique, également à l'état de poudre. Ce mélange de poudres peut être utilisé tel quel, par exemple en vue de l'imprégnation d'un faisceau ou tissu de fibres de renforcement, ou bien être pressé ou extrudé pour former des produits semi-finis tels que des fibres, des plaques, des feuilles, des films, des granules, etc.

L'incorporation de la substance absorbante au matériau thermoplastique peut aussi se réaliser au fondu, c'est-à-dire après fusion de ce dernier dans un dispositif approprié, par exemple dans une extrudeuse ou dans un malaxeur. Elle se réalise de préférence dans une extrudeuse.

Vu la faible quantité de substance absorbante requise conformément à l'invention, il peut être commode de procéder à l'incorporation de la substance absorbante en recourant à la technique bien connue du mélange-maître, qui consiste à mélanger aux constituants du matériau thermoplastique une faible quantité d'un prémélange plus concentré de la substance absorbante et d'un ou plusieurs des constituants du matériau thermoplastique. Le dosage et la dispersion de la substance absorbante en sont ainsi facilités.

On a constaté avec étonnement que la concentration optimale de substance absorbante était extrêmement faible. Selon la présente invention, la concentration minimale de substance absorbante (exprimée en masse de substance absorbante par rapport à la masse totale de la ou des matières polymères présentes dans le matériau thermoplastique) est d'environ 1 ppm, de préférence 5 ppm. Sa concentration maximale est d'environ 1000 ppm, de préférence 100 ppm, de manière particulièrement préférée 50 ppm. Ces concentrations peuvent naturellement être influencées, notamment par la nature de la substance absorbante, par des paramètres spécifiques à l'application envisagée tels que l'épaisseur et la nature du matériau thermoplastique, ou encore le type et la quantité d'éventuelles fibres de renforcement.

Le matériau thermoplastique selon l'invention peut éventuellement contenir en outre un ou plusieurs additifs connus tels que notamment pigments, stabilisants, compatibilisants, adjuvants de mise en oeuvre, particules conductrices de l'électricité ou charges minérales.

Les matériaux thermoplastiques de l'invention comprennent un ou plusieurs composants fibreux de renforcement, par exemple des fibres de verre, de métal et/ou d'aramide. Les fibres de verte donnent d'excellents résultats. Les matériaux thermoplastiques ainsi renforcés peuvent notamment se présenter sous la forme de faisceaux, tresses, nappes ou tissus de fibres imprégnés d'un ou plusieurs polymères thermoplastiques, ou de faisceaux ou tissus co-mêlés de fibres de renforcement et de fibres thermoplastiques (comingled fibers).

Comme déjà exposé, les matériaux thermoplastiques visés peuvent également se présenter sous la forme de poudre, ou encore sous la forme de produits semi-finis tels que films, plaques, bandes ou fibres.

L'incorporation de substance absorbante en de telles concentrations au sein d'un matériau thermoplastique offre des avantages particulièrement intéressants dans le cas de faisceaux ou tissus de fibres de renforcement imprégnés par un ou plusieurs polymères, qu'il s'agisse de leur fabrication ou de leur mise en oeuvre en vue du renforcement d'autres articles. En effet, on a constaté qu'il est ainsi possible d'obtenir un chauffage très homogène du matériau thermoplastique, ce qui garantit une excellente uniformité de ses propriétés mécaniques et réduit considérablement les risques de dégradation thermique. En outre, le chauffage est fortement accéléré, d'où résulte une importante augmentation de productivité. Finalement, la très faible quantité de substance absorbante n'affecte pas la résistance mécanique des matériaux thermoplastiques conformes à l'invention, ce qui est particulièrement avantageux lorsqu'ils se présentent sous la forme de fibres de faible diamètre, destinées par exemple à former des tissus ou faisceaux co-mêlés de fibres de renforcement et de fibres d'une matière thermoplastique.

Comme exposé ci-dessus, les matériaux thermoplastiques conformes à l'invention trouvent de nombreuses applications avantageuses, par exemple lors de la fabrication de faisceaux, tissus, tresses ou nappes de fibres de renforcement imprégnés de polymère(s) thermoplastiques(s), soit par chauffage de fibres de renforcement entre lesquelles ont été dispersés un ou plusieurs polymères thermoplastiques en poudre, soit par chauffage de faisceaux ou tissus co-mêlés de fibres de renforcement et de fibres thermoplastiques; ou encore lors de la mise en oeuvre de tels faisceaux et tissus imprégnés, lors du thermoformage d'articles plats.

L'invention est particulièrement avantageuse dans le cas où le composant fibreux de renforcement évoqué ci-dessus comprend au moins un faisceau de fibres individuelles imprégné d'au moins un polymère thermoplastique. De manière préférée, le faisceau de fibres individuelles imprégné de polymère thermoplastique comprend des fibres de verre.

La présente invention concerne également un procédé de fabrication d'un article en matériau thermoplastique, dans lequel on soumet ledit matériau à un chauffage par rayonnement infra-rouge, qui se caractérise en ce qu'on utilise un matériau thermoplastique tel que décrit ci-dessus.

Comme exposé précédemment, le procédé selon l'invention est utilisable dans de nombreuses applications où il est nécessaire de provoquer la fusion ou le ramollissement d'un matériau thermoplastique, par exemple lors du manchonnage de tuyaux, ou encore lors de la fabrication de tissus, faisceaux, tresses ou nappes de fibres de renforcement imprégnés d'un polymère thermoplastique, même si ces matériaux sont épais. Il s'applique également à la mise en oeuvre de ces tissus et autres articles imprégnés, que l'on utilise couramment pour renforcer des articles tels que plaques, tuyaux. Lors de leur mise en oeuvre, il est en effet nécessaire de provoquer la fusion ou le ramollissement du polymère présent dans le matériau thermoplastique en question, afin de garantir son adhérence à l'article à renforcer, dont la surface extérieure est généralement préchauffée.

En particulier, la présente invention concerne également un procédé de fabrication d'un tuyau renforcé d'une gaîne périphérique comprenant au moins un composant fibreux imprégné d'au moins un polymère thermoplastique, qui se caractérise en ce que l'on met en oeuvre, pour la fabrication de ladite gaîne, un matériau thermoplastique tel que défini ci-dessus, et en ce qu'on réalise la gaîne autour du tuyau en chauffant ledit matériau par rayonnement infra-rouge.

On vise ici la technique dite de l'enroulement filamentaire, qui consiste à enrouler autour d'un tuyau, en spires serrées, un ou plusieurs faisceaux de fibres de renforcement continues, de préférence des fibres de verre, imprégnés d'au moins un polymère thermoplastique, de manière à réaliser autour du tuyau une gaîne de renforcement. Pour garantir la bonne adhérence des faisceaux de fibres imprégnés au tuyau sur lequel on les enroule, ces faisceaux doivent être chauffés à une température adéquate avant qu'ils n'entrent en contact avec le tuyau. L'application du procédé décrit ci-dessus à un tel faisceau de fibres est dès lors avantageuse, car elle permet d'augmenter sa vitesse de chauffage, et donc la vitesse de fabrication des tuyaux renforcés, ou bien, à vitesse égale, d'utiliser des dispositifs de chauffage plus courts. Ceci est particulièrement intéressant sur la plan de la construction des machines d'enroulement filamentaire, qui comprennent généralement un plateau rotatif de grand diamètre (parfois plus d'un mètre), coaxial à l'axe du tuyau à renforcer, qui doit porter la ou les bobines de faisceaux de fibres de renforcement imprégnés ainsi que le nombre correspondant de dispositifs de chauffage. L'utilisation du procédé de chauffage décrit permet par conséquent de réduire la taille, et donc le coût, des machines d'enroulement filamentaire.

Un cas particulièrement avantageux d'application de ce procédé de fabrication d'un tuyau renforcé par enroulement Filamentaire est celui où le tuyau est constitué d'un polymère thermoplastique de la même famille que celui de la gaine. En effet, lorsque le tuyau est constitué d'une matière thermoplastique de la même famille que celle imprégnant le(s) faisceau(x) de fibres de renforcement formant la gaîne après mise en oeuvre, par exemple lorsque ces deux matières plastiques sont de préférence des polyoléfines, en particulier des homo- ou des copolymères du propylène ou de l'éthylène, il en résulte notamment un bonne compatibilité entre le tuyau proprement dit et le faisceau de fibres de renforcement, et une proximité de leurs températures de fusion. L'enroulement Filamentaire en est ainsi facilité, et garantit une bonne adhérence tuyau-faisceau ainsi qu'une recyclabilité aisée du tuyau renforcé.

Quelle que soit la nature du matériau thermoplastique, le chauffage peut se faire au moyen de tout dispositif émettant un rayonnement infra-rouge, par exemple d'une lampe à filament de tungstène. Le temps d'irradiation dépend de plusieurs paramètres spécifiques à chaque application, comme par exemple l'épaisseur du matériau thermoplastique à chauffer, la nature et la quantité exactes de substance absorbante, la présence éventuelle et le type de fibres de renforcement, etc.

De préférence, le rayonnement utilisé est un rayonnement infra-rouge court. Par rayonnement infra-rouge court, on entend désigner un rayonnement dont le pic d'émission maximale a une longueur d'onde inférieure à environ 6 µm, de préférence inférieure à 3 µm. Généralement, la longueur d'onde moyenne de ce rayonnement est supérieure à 0.7 µm. On a constaté avec surprise qu'un tel rayonnement, bien que faiblement absorbé par la plupart des polymères, conduisait à un chauffage beaucoup plus efficace des matériaux thermoplastiques conformes à l'invention.

La présente invention permet également d'obtenir des articles constitués d'au moins une matière thermoplastique, par exemple des plaques, renforcés par au moins un faisceau de fibres de renforcement imprégné tel que défini ci-dessus. En particulier, les faisceaux imprégnés conformes à l'invention se révèlent particulièrement utiles pour le renforcement de tuyaux constitués de matière thermoplastique; on obtient ainsi des tuyaux qui présentent une remarquable résistance à la pression interne.

Lors du renforcement de ces articles, il est nécessaire de chauffer ces faisceaux avant de les appliquer sur les articles à renforcer. La facilité avec laquelle les faisceaux imprégnés conformes à l'invention peuvent être chauffés conduit à une productivité accrue et garantit une excellente adhérence entre les fibres de renforcement et leur matrice, et donc, en fin de compte, entre les fibres de renforcement et l'article à renforcer.

### Exemples

Les exemples qui suivent illustrent la fabrication de matériaux thermoplastiques renforcés de fibres de verre continues, conformes à l'invention. Pour ce faire, on disperse entre les fibres de verre un matériau thermoplastique à l'état de poudre, mis en suspension dans un gaz porteur (air) dans un lit fluidisé (au moyen d'un équipement de la marque FLEXLINE ®). Après dispersion de la poudre entre les fibres de verre, celles-ci passent dans un four, afin d'assurer la fusion de la matière thermoplastique et l'imprégnation par celle-ci du faisceau de fibres de verre. Ce four est du type à infra-rouges courts dont l'émission nominale se fait à une longueur d'onde de 1.5 µm. Le produit ainsi obtenu est alors refroidi et calibré.

La matière thermoplastique utilisée est un homopolymère du propylène, de marque ELTEX ® HY, commercialisé par SOLVAY (MI (230 °C, 2.16 kg) : 45 g/10 min). Les fibres de verre sont du type roving à assemblage direct, de 2.4 g/m de masse linéique et d'un diamètre d'environ 17 µm par filament. Le concentration nominale de fibres de verre dans le produit final ainsi obtenu est d'environ 65 % en masse.

Les exemples 1R et 2R sont donnés à titre de comparaison; l'exemple 3 est conforme à l'invention.

### Exemple 1R

Sans utiliser aucune substance absorbante, la vitesse de fabrication permettant la formation d'un faisceau de fibres de verre correctement imprégné par la matière thermoplastique est d'environ 25 m/min.

### Exemple 2R

Dans les mêmes conditions opératoires que ci-dessus, on a ajouté à la poudre de matière thermoplastique 0.5 % en masse de noir de carbone (par rapport à la matière thermoplastique). Dans ces conditions, la vitesse de fabrication a pu être doublée; cependant, le produit ainsi obtenu n'était pas homogène. Lors de son refroidissement et de sa calibration, notamment, on a observé une délamination des couches superficielles par rapport à la partie centrale.

### Exemple 3

L'incorporation de noir de carbone en concentrations comprises entre 5 et 10 ppm permet d'obtenir, dans les conditions opératoires décrites ci-dessus et à une vitesse de fabrication de 45 m/min, un faisceau imprégné dont l'homogénéité - notamment la dispersion et la qualité de l'imprégnation des fibres de verre - est au moins équivalente à celle du faisceau imprégné obtenu dans l'exemple 1R.

## Revendications

1. Matériau thermoplastique comprenant au moins une polyoléfine, un ou plusieurs composants fibreux de renforcement et au moins une substance absorbant substantiellement le rayonnement infra-rouge, dont l'absorption entre les longueurs d'onde de 750 mm et 1 mm est d'au moins 50 % de celle du corps noir, caractérisé en ce qu'il comprend de 1 à 1000 ppm en masse de substance absorbant exprimée par rapport à la masse totale de la ou des matières polymères présentes dans le matériau thermoplastique.

2. Matériau thermoplastique selon la revendication 1, dans lequel la substance absorbante comprend du noir de carbone.

3. Matériau thermoplastique selon la revendication 1 ou 2, dans lequel le composant fibreux de renforcement comprend des fibres de verre.

4. Matériau thermoplastique selon l'une des revendications 1 à 3, dans lequel le composant fibreux comprend au moins un faisceau de fibres individuelles imprégné d'au moins un polymère thermoplastique.

5. Procédé de fabrication d'un article en matériau thermoplastique, dans lequel on soumet ledit matériau à un chauffage par rayonnement infra-rouge, caractérisé en ce qu'on utilise un matériau thermoplastique conforme à l'une quelconque des revendications précédentes.

6. Procédé de fabrication d'un tuyau renforcé d'une gaine périphérique comprenant au moins un composant fibreux imprégné d'au moins un polymère thermoplastique, caractérisé en ce qu'on met en oeuvre, pour la fabrication de ladite gaine, un matériau thennoplastique conforme à l'une des revendications 1 à 4, et en ce qu'on réalise la gaine autour du tuyau en chauffant ledit matériau par rayonnement infra-rouge.

7. Procédé selon la revendication 6, dans lequel le tuyau est constitué d'un polymère thermoplastique de la même famille que celui de la gaine.

8. Procédé selon l'une des revendications 5 à 7, dans lequel le rayonnement est un rayonnement infra-rouge court, dont le pic d'émission maximale a une longueur d'onde inférieure à environ 6 µm.

## Patentansprüche

1. Thermoplastisches Material, das wenigstens ein Polyolefin, ein oder mehrere Faserbestandteile zur Verstärkung und wenigstens eine im wesentlichen die Infrarotstrahlung absorbierende Substanz, deren Absorption zwischen den Wellenlängen von 750 mm und 1 mm wenigstens 50% derjenigen des schwarzen Körpers beträgt, umfaßt, dadurch gekennzeichnet, daß es 1 bis 1000 Masse-ppm absorbierender Substanz, ausgedrückt bezogen auf die Gesamtmasse des oder der Polymere, die in dem thermoplastischen Material vorhanden sind, umfaßt.

2. Thermoplastisches Material gemäß Anspruch 1, in dem die absorbierende Substanz Carbonschwarz umfaßt.

3. Thermoplastisches Material gemäß Anspruch 1 oder 2, in dem der Faserbestandteil zur Verstärkung Glasfasern umfaßt.

4. Thermoplastisches Material gemäß einem der Ansprüche 1 bis 3, in dem der Faserbestandteil wenigstens ein Bündel Einzelfasern umfaßt, das mit wenigstens einem thermoplastischen Polymer getränkt ist.

5. Verfahren zur Herstellung eines Gegenstands aus thermoplastischem Material, bei dem man besagtes Material einem Erhitzen durch Infrarotstrahlung unterzieht, dadurch gekennzeichnet, daß man ein thermoplastisches Material gemäß einem der vorhergehenden Ansprüche verwendet.

6. Verfahren zur Herstellung eines Rohrs, das mit einer Außenummantelung verstärkt ist, die wenigstens einen Faserbestandteil, der mit wenigstens einem thermoplastischen Polymer getränkt ist, umfaßt, dadurch gekennzeichnet, daß man für die Herstellung besagter Ummantelung ein thermoplastisches Material gemäß einem der Ansprüche 1 bis 4 verwendet und dadurch, daß man die Ummantelung um das Rohr herum durch Erhitzen besagten Materials durch Infrarotstrahlung herstellt.

7. Verfahren gemäß Anspruch 6, bei dem das Rohr aus einem thermoplastischen Polymer derselben Familie wie dasjenige der Ummantelung besteht.

8. Verfahren gemäß einem der Ansprüche 5 bis 7, bei dem die Strahlung eine kurzwellige Infrarotstrahlung ist, deren maximaler Emissionspeak eine Wellenlänge unterhalb ungefähr 6 µm hat.

## Claims

1. Thermoplastic material, comprising at least one polyolefin, one or more fibrous reinforcement components and at least one substance which substantially absorbs infrared radiation, of which the absorption at wavelenghts from 750 nm to 1 mm is at least 50 % of that of a black body, characterized in that it comprises 1 to 1,000 ppm by weight of absorbent substance, expressed with respect to the total weight of the polymer material or materials present in the thermoplastic material.

2. Thermoplastic material according to Claim 1, in which the absorbent substance comprises carbon black.

3. Thermoplastic material according to Claim 1 or 2, in which the fibrous reinforcement component comprises glass fibres.

4. Thermoplastic material according to one of Claims 1 to 3, in which the fibrous component comprises at least one bundle of individual fibres which is impregnated with at least one thermoplastic polymer.

5. Method of manufacturing an article made of thermoplastic material, in which the said material is subjected to infrared-radiation heating, characterized in that a thermoplastic material is used in accordance with any one of the preceding claims.

6. Method of manufacturing a pipe reinforced with a peripheral jacket comprising at least one fibrous component impregnated with at least one thermoplastic polymer, characterized in that in order to manufacture the said jacket. a thermoplastic material in accordance with one of Claims 1 to 4 is employed and in that the jacket is produced around the pipe by heating the said material using infrared radiation.

7. Method according to Claim 6, in which the pipe is made of a thermoplastic polymer of the same family as that of the jacket.

8. Method according to one of Claims 5 to 7, in which the radiation is shortwave infrared radiation, of which the maximum emission peak has a wavelength less than about 6 µm.
